# EUROPÄISCHE PATENTSCHRIFT

(11) **EP 1 943 050 B1**
(45) Veröffentlichungstag und Bekanntmachung des Hinweises auf die Patenterteilung: **24.02.2010**
(21) Anmeldenummer: 06777090.9
(22) Anmeldetag: 28.08.2006
(51) Int. Cl.: B23P 11/02, B23B 31/26, B23Q 3/08

(54) **VORRICHTUNG ZUM LÖSBAREN SPANNEN EINES WERKZEUGS AN EINER SPINDELWELLE EINER WERKZEUGMASCHINE**
DEVICE FOR DETACHABLY CLAMPING A TOOL ON A SPINDLE SHAFT OF A MACHINE-TOOL
DISPOSITIF DE SERRAGE AMOVIBLE D'UN OUTIL SUR UN ARBRE DE BROCHE D'UNE MACHINE-OUTIL

(30) Priorität: 14.10.2005 DE 102005049225; 23.01.2006 DE 202006000983 U; 21.02.2006 DE 202006002763 U
(43) Veröffentlichungstag der Anmeldung: 16.07.2008
(73) Patentinhaber: P & L GmbH & Co. KG, 20148 Hamburg (DE)
(72) Erfinder: RÖDERS, Jürgen, 20148 Hamburg (DE)
(74) Vertreter: Weber, Joachim
(86) Internationale Anmeldenummer: PCT/EP2006/008404
(87) Internationale Veröffentlichungsnummer: WO 2007/042104

(56) Entgegenhaltungen:
- EP-A1- 0 382 079
- EP-A1- 1 529 584
- EP-A2- 0 437 322
- DE-B3- 10 255 362
- FR-A- 2 862 896
- JP-A- 2002 120 115
- JP-A- 2002 283 162
- US-A1- 2005 141 978

## Beschreibung

Die Erfindung bezieht sich auf eine Vorrichtung sowie eine Werkzeugspannhülse gemäß dem jeweiligen unabhängigen Anspruch. Im einzelnen bezieht sich die Erfindung auf eine Vorrichtung zum lösbaren Spannen eines Werkzeugs an einer drehbaren Spindelwelle mittels eines Passsitzes oder Schrumpfsitzes.

Eine Vorrichtung mit den Merkmalen der Oberbegriffe der Ansprüche 1 und 14 ist aus der US 2005/0141978 A1 bekannt. Die aus dieser Schift bekannte Hülse besitzt axialorientierte Schlitze an der äußeren Fläche.

Für die Aufnahme von Bearbeitungswerkzeugen in Antriebsspindeln mit hohen Drehzahlen gibt es unterschiedliche Verfahren. Die Bearbeitungswerkzeuge haben meistens unterschiedliche Schaftdurchmesser. Daher werden diese zunächst in einen Werkzeughalter reibschlüssig aufgenommen. Für hohe Drehzahlen hat sich das Schrumpfverfahren durchgesetzt. Die Werkzeugaufnahme hat eine Bohrung mit einer Passung, die etwas kleiner als der Schaft des Bearbeitungswerkzeuges ist. Über eine geeignete Heizung, z.B. durch Induktion, wird die Werkzeugaufnahme erwärmt, so dass sich die Bohrung so weit aufweitet, dass der Schaft des Bearbeitungswerkzeuges in die Bohrung eingeführt werden kann. Anschließend wird die Werkzeugaufnahme wieder abgekühlt und damit verkleinert sich die Bohrung so, dass der in der Bohrung befindliche Werkzeugschaft reibschlüssig gespannt wird. Dieses Verfahren erlaubt eine hohe Genauigkeit der Werkzeugsspannung in Werkzeugaufnahmen, insbesondere hinsichtlich des erreichbaren Rundlaufs.

Für das Spannen der Werkzeugaufnahme mit dem darin befindlichen Bearbeitungswerkzeug in der Antriebsspindel wird für hohe Drehzahlen meist eine Variante der Hohlschaftkegel-Spannung verwendet. Dazu hat die Werkzeugaufnahme an dem der Bohrung für die Spannung des Bearbeitungswerkzeuges gegenüberliegenden Ende einen entsprechenden Kegel. Die Antriebsspindel verfügt über einen entsprechenden Spannmechanismus und eine Schnittstelle um den Hohlschaftkegel der Werkzeugaufnahme aufzunehmen.

Ein wesentlicher Nachteil dieses Verfahrens besteht darin, dass die Spannung über Hohlschaftkegel in der Genaugikeit, besonders was den erreichbaren Rundlauf angeht, begrenzt ist. Ein weiterer Nachteil besteht darin, dass die Spannung des Hohlschaftkegels von innen erfolgt. Die Spannung des Bearbeitungswerkzeuges findet auf der anderen Seite der Werkzeugaufnahme statt. Die Werkzeugaufnahme befindet sich somit zwischen der Spindelwelle der Antriebsspindel und dem Bearbeitungswerkzeug. Somit entsteht ein relativ großer Abstand zwischen Spindelwelle der Antriebsspindel und Bearbeitungswerkzeug. Auch kleinste Winkelfehler bei der Spannung der Werkzeugaufnahme in der Spindelwelle der Antriebsspindel führen daher zu zusätzlichen Ungenauigkeiten am Bearbeitungswerkzeug bezüglich Rundlauf.

Aus der EP 0 382 079 A1 ist eine Vorrichtung zum Spannen von Werkzeugen bekannt, bei welcher am freien Ende der Spindel ein hülsenförmiger Abschnitt ausgebildet ist, in welchen direkt ein Werkzeug einschrumpfbar ist. Der hülsenförmige Abschnitt muss exakt zu der Dimensionierung des Werkzeugs passen. Die Verwendung unterschiedlich dimensionierter Werkzeuge ist nicht möglich.

Die EP 0 437 322 A2 offenbart die Spindeleinheit einer Werkzeugmaschine. Die Spindel ist mit einem zylindrischen Ansatz versehen, auf welchen ein mit einer zu dem Ansatz passenden Ausnehmung versehener Werkzeughalter aufschrumpfbar ist. Der Werkzeughalter wird mittels einer Induktionserwärmung entsprechend erwärmt, um die Schrumpfpassung zu lösen. An dem gegenüberliegenden, freien Ende des Werkzeughalters ist ein Werkzeug befestigt. Bei dieser Ausgestaltung erweist es sich ebenfalls als nachteilig, dass der Werkzeughalter jeweils exakt passend zu der Spindelwelle gefertigt werden muss.

FR 2 862 896 A offenbart eine Vorrichtung zum lösbaren Spannen eines Werkzeugs an einer drehbaren Spindelwelle einer Werkzeugmaschine. Dabei wird eine Hülse in eine axiale Ausnehmung der Spindelwelle eingesetzt. In diese rohrförmige Hülse wiederum ist das Werkzeug eingesetzt. Die Befestigung zwischen der Spindelwelle, der Hülse und dem Werkzeug erfolgt jeweils über einen Passsitz in Form einer doppelten Schrumpfpassung.

Der Erfindung liegt die Aufgabe zugrunde, eine Vorrichtung der eingangs genannten Art zu schaffen, welche bei einfachem Aufbau und einfacher, kostengünstiger Realisierbarkeit eine schnelle und universelle Spannung von Werkzeugen ermöglicht.

Erfindungsgemäß wird die Aufgabe durch die Merkmalskombinationen der unabhängigen Ansprüche gelöst. Die jeweiligen Unteransprüche zeigen weitere vorteilhafte Ausgestaltungen der Erfindung.

Die Spannung von Werkzeugen ist somit mit unterschiedlichen Schaftdurchmessern an der Spindelwelle mit höchstmöglichem Rundlauf und möglichst kurzem Abstand zur Spindelwelle zur Vermeidung der Auswirkung von Winkelfehlern auf den Rundlauf möglich.

Die Spindelwelle ist am Ende für die Aufnahme des Werkzeughalters rohrförmig ausgeführt. Es ist vorgesehen, den Schaft des Bearbeitungswerkzeuges in einer entsprechend ausgeführten Hülse zu spannen. Die Spannung des Bearbeitungswerkzeuges in der Hülse erfolgt ebenfalls über Schrumpftechnik, d.h. Erwärmung der Hülse zwecks Aufweitung der Passbohrung in der Hülse, Einführen des Werkzeuges und anschließende Abkühlung zur Spannung des Werkzeuges über Reibschluss. Dieser Vorgang erfolgt außerhalb der Maschine.

Für den Werkzeugwechsel in der Maschine wird eine Induktionsspule in den Bereich des Endes der Spindelwelle der Antriebsspindel gebracht, entweder fest montiert oder temporär für den Werkzeugwechselvorgang. Das Ende der Spindelwelle enthält eine Passbohrung mit einem Innendurchmesser, der etwas kleiner als der Außendurchmesser der Hülse ist. Zunächst wird das Spindelende im Bereich der Passbohrung über Induktion erwärmt. Damit weitet sich die Passbohrung in der Spindelwelle. Die Hülse mit dem eingeschrumpften Bearbeitungswerkzeug kann in die Spindelwelle eingeschoben werden. Anschließend wird die Spindelwelle wieder abgekühlt. Damit verringert sich der Durchmesser der Passbohrung in der Spindelwelle und die Hülse wird reibschlüssig gespannt.

Um eine nur lokale Erwärmung der Spindelwelle im rohrförmigen Endbereich sicherzustellen, insbesondere auch um die Lager der Spindelwelle vor zu großer Erwärmung zu schützen, können die Induktionsspulen mit Ferritkernen abgeschirmt werden. Damit wird sichergestellt, dass die Erwärmung nur in dem gewünschten Bereich erfolgt.

Um ein Werkzeug aus der Spindel zu entfernen, wird analog vorgegangen. Wichtig ist dabei aber eine ausreichende Erwärmungsgeschwindigkeit der Spindelwelle, damit sich die Schrumpfpassung zwischen der Hülse und der Spindelwelle löst, bevor sich die Schrumpfpassung zwischen Bearbeitungswerkzeug und Hülse löst. Wenn die Erwärmungsgeschwindigkeit durch die Induktion ausreichend hoch ist, entsteht ein Temperaturgradient in dem Verbund Bearbeitungswerkzeug, Hülse und Spindelwelle, der genau dazu führt, dass sich zuerst die Hülse von der Spindelwelle löst, während der Verbund Hülse Bearbeitungswerkzeug noch unverändert ist. Wesentlich ist, dass die Induktionserwärmung von außen und mit ausreichender Leistung erfolgt. Dann ist das Verfahren auch für größere Durchmesser und relativ schlanke Hülsen (geringe Differenz zwischen Innen- und Außendurchmesser der Hülse) einsetzbar.

Wenn die Erwärmung ausreichend schnell erfolgt, ist eine zusätzliche Kühlung nicht erforderlich. Die tatsächlich eingebrachte Wärmemenge ist so gering, dass das Ende der Spindelwelle über Wärmeleitung, Konvektion und Strahlung relativ schnell wieder abkühlt. Die Spannung der Hülse über Reibschluss erfolgt dann auch ohne zusätzliche Kühlung ausreichend schnell.

Der wesentliche Vorteil dieser Anordnung besteht darin, dass Spindelwelle, Hülse und das Bearbeitungswerkzeug nicht hintereinander angeordnet sind und dadurch das Bearbeitungswerkzeug lang aus der Spindelwelle auskragt, bzw. relativ weit von dieser entfernt ist, sondern dass Spindelwelle, Werkzeugaufnahme (Hülse) und Bearbeitungswerkzeug in einander geschoben sind. Damit lassen sich sehr kurze Abstände zwischen der Spindelwelle und dem Bearbeitungswerkzeug realisieren, was sehr wesentlich für die Genauigkeit bzw. den Rundlauf des Bearbeitungswerkzeuges ist.

Die doppelte Schrumpfpassung (Spindelwelle zu Hülse und Hülse zu Bearbeitungswerkzeug) kann in ihrem Verhalten auch durch die Materialpaarung (Materialien mit unterschiedlichen Wärmeausdehnungskoeffizienten) beeinflusst werden. Dies ist aber nicht erforderlich. Wesentlich für ein zuverlässiges Ein- und Ausspannen der Hülse in der Spindelwelle ist der bei der Induktion entstehende Temperaturgradient.

Auf Grund des entfallenden Spannmechanismus für den Hohlschaftkegel oder ähnliches kann die Spindelwelle massiv ausgeführt werden. Es besteht aber auch die Möglichkeit, eine Kühlung vorzusehen. Der durch den Wegfall des Spannmechanismus entstehende Platz in der Spindelwelle kann für Kühlbohrungen verwendet werden, auch wenn die Spindelwelle relativ schlank ist. Die Kühlung der Spindelwelle unterstützt außerdem den Abkühlvorgang des Endes der Spindelwelle nach dem Abschalten der Induktionserwärmung.

Am aus der Spindelwelle herausstehenden Ende der Hülse kann ein Anschlag vorgesehen werden, der beim Einschieben in die Spindelwelle die Einschubtiefe bestimmt und begrenzt.

Am aus der Spindelwelle herausstehenden Ende der Hülse können ein oder zwei Greiferrillen für den Werkzeugwechsel vorgesehen werden.

Die Hülse und/oder die Spindelwelle können mit einer Einführschräge versehen werden, um vor dem Einschieben der Hülse in die Spindelwelle eventuell bestehenden radialen Versatz zwischen Hülse und Spindelwelle auszugleichen.

Die Spindelwelle kann Entlüftungsbohrungen enthalten, damit die Luft beim Ein- bzw. Ausschieben der Hülse aus der Spindelwelle entweichen bzw. hineinkommen kann.

Die Passung für den Schrumpfsitz des Bearbeitungswerkzeuges muss nicht auf der ganzen Länge der Hülse vorgesehen werden. Sie kann vielmehr nach den für die Schrumpfspannung von Bearbeitungswerkzeugen in Werkzeugaufnahmen bekannten Verfahren ausgelegt und z.B. nur auf der Seite der Hülse vorgesehen werden, auf der das Bearbeitungswerkzeug aus der Hülse heraussteht. Auf der anderen Seite kann der Durchmesser der Hülse größer ausgelegt werden, so dass die Passung für den Schrumpfsitz des Bearbeitungswerkzeuges nicht so auf voller Länge der Hülse gefertigt werden muss.

Für eine schnellere Angleichung der Temperatur der Spindelwelle an die Umgebung können radial umlaufende Kühlrippen in der Spindelwelle vorgesehen sein. Die Hülse wird bereits durch das Profil der Greiferrillen gekühlt.

In der Hülse kann ein Boden (Wand) als Anschlag für das einzuspannende Bearbeitungswerkzeug vorgesehen werden. In diesem Boden sollte jedoch eine oder mehrere Bohrungen zur Entlüftung beim Einspannen des Bearbeitungswerkzeuges in die Hülse vorgesehen werden.

Für den Werkzeugwechsel ist es vorteilhaft, wenn die Induktionsspule die Spindelwelle relativ dicht umschließt. Damit ist eine radiale Bewegung der Spindelwelle in der Induktionsspule nur eingeschränkt möglich. Für den Werkzeugwechsler werden daher Kunststoffzangen zur Aufnahme der Hülsen vorgeschlagen, bei denen die Hülse mit dem gespannten Bearbeitungswerkzeug mit einer sehr geringen radialen Bewegung und einer überwiegend axialen Bewegung an die Kunststoffzange übergeben wird, bei gleichzeitig guter Spannung in axialer Richtung.

Die Kunststoffzange ist dazu auf einer Seite geöffnet. Damit kann die Hülse prinzipiell auch radial in die Zange eingeschoben werden. Während dieses Vorgangs werden die beiden Zangenarme elastisch aufgeweitet und umschließen die Hülse, wenn diese ihre zentrische Position in der Zange eingenommen hat. In den Zangen sind drei Stege vorgesehen, die die Hülse in axialer Richtung in ihrer Position sichern. Außerdem ist am unteren Ende der Hülse eine Einführschräge vorgesehen. Damit wird eine zweite Art der Übergabe der Hülse an die Zange möglich, die einen erheblich geringeren radialen Hub erfordert. Die Hülse kann axial in die Zange eingefahren werden. Dabei muss diese nur soweit aus der Mitte der Zange versetzt sein, dass die Hülse beim axialen Einfahren in die Zange den mittleren Steg nicht berührt. Die beiden Zangenarme werden dabei durch die unten an der Hülse befindliche Einführschräge elastisch auseinander gebogen, besonders im Bereich der beiden an den Zangenarmen befindlichen Stege. Wenn die Hülse in axialer Richtung die Position zur Übergabe erreicht hat, schnappen die beiden Stege an den Zangenarmen bereits in die dafür vorgesehene Nut ein. Anschließend kann eine kurze radiale Bewegung der Hülse in Richtung des mittleren Steges erfolgen, so dass dieser auch in die vorgesehene Nut einfasst. Damit wird eine gute Sicherung der Hülse in axialer Richtung erreicht.

Die Zangen können so ausgelegt sein, dass diese ohne Hülse einen etwas kleineren Durchmesser haben (entspannter Zustand), als wenn die Hülse darin aufgenommen ist. So entsteht eine leichte Vorspannung der Zangenarme bei aufgenommener Hülse.

Wesentlich ist, dass die Einführschräge am Ende der Hülse ausreichend groß gewählt ist, um einen eventuellen radialen Versatz in der Position zwischen Hülse und Zange am Beginn der Übergabe auszugleichen.

Für die Entnahme der Hülse aus der Zange erfolgt der Bewegungsablauf in umgekehrter Reihenfolge. Die Hülse wird zunächst radial etwas in Richtung der offenen Zangenarme relativ zur Zange bewegt. Dabei weiten sich die Zangenarme schon geringfügig auf. Wenn der mittlere Steg ganz aus der Nut der Hülse heraus ist, kann die Hülse axial aus der Zange herausgefahren werden. Dabei weiten sich die beiden Zangenarme elastisch weiter, bis die beiden Stege an den Zangenarmen ebenfalls ganz aus der Nut heraus sind.

Im Folgenden wird die Erfindung anhand eines Ausführungsbeispiels in Verbindung mit der Zeichnung beschrieben. Dabei zeigt:
- Fig. 1: eine Teil-Längs-Schnittansicht einer Spindelwelle mit Hülse und Werkzeug im gespannten Zustand;
- Fig. 2: eine Schnittansicht einer Hülse mit aufgesetzter Greiferzange;
- Fig. 3: eine Draufsicht auf eine Greiferzange;
- Fig. 4: eine Schnittansicht der Greiferzange gemäß Linie A-A von Fig. 3;
- Fig. 5 bis 8: unterschiedliche Arbeitsschritte bei der Entnahme des Werkzeugs zusammen mit der Hülse aus der Spindelwelle,
- Fig. 9: eine Teil-Ansicht eines erfindungsgemäßen Ausführungsbeispiels,
- Fig. 10: eine Schnittansicht eines anderen Ausführungsbeispiels ohne Hülse und
- Fig. 11: eine weitere Teil-Ansicht eines weiteren Ausführungsbeispiels,
- Fig. 12: eine Schnittansicht längs der Linie A-A von Fig. 11, und
- Fig. 13: eine vergrößerte Darstellung des Details der Fig. 12.

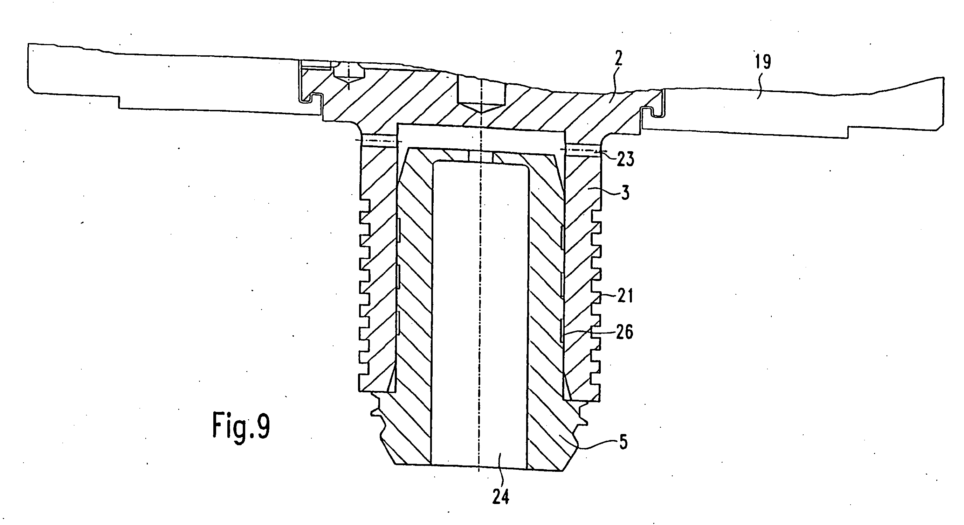

Also zeigt lediglich Figur 9 ein erfindungsgemäßes Ausführungsbeispiel.

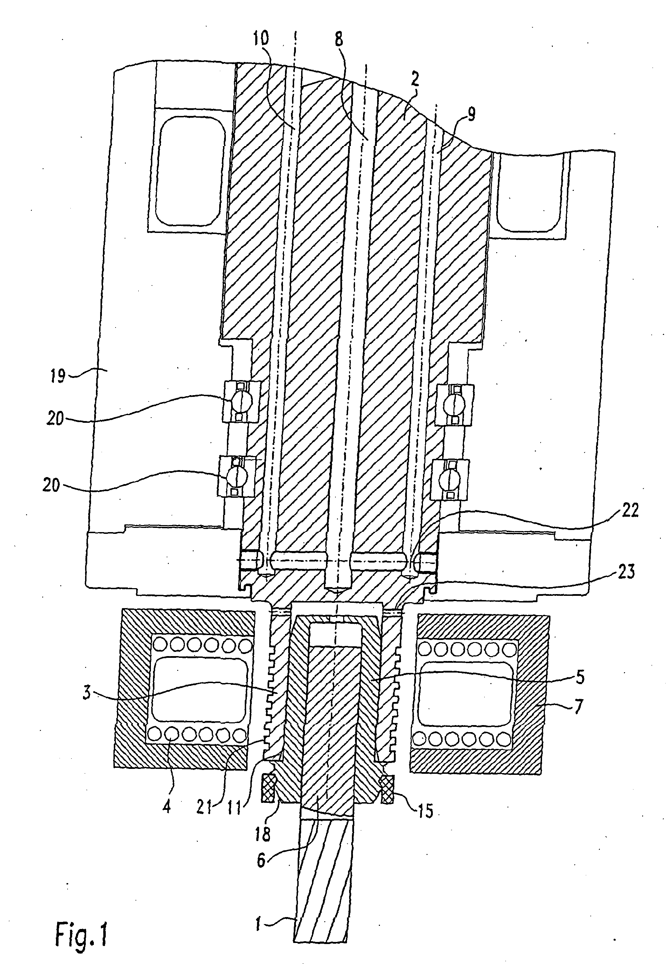

Fig. 1 zeigt in Teil-Ansicht ein Spindelgehäuse 19 mit Lagern 20, in welchem drehbar eine Spindelwelle 2 gelagert ist.

Am unteren, freien Endbereich der Spindelwelle 2 ist ein rohrförmiges Ende 3 ausgebildet, welches mit einer Vielzahl von umlaufenden Kühlrippen 21 versehen ist. In das Ende 3 ist eine zentrische Ausnehmung 22 eingebracht, an deren Boden seitlich Entlüftungsbohrungen 23 vorgesehen sind. Diese sind aus Gründen der Auswuchtung symmetrisch oder in anderer geeigneter Weise angeordnet.

Im Inneren der massiv ausgeführten Spindelwelle 2 verläuft ein mittiger Kühlmittelkanal 8 zur Zuführung von Kühlmittel. Weiterhin sind achsparallele Kühlmittelkanäle 9 und 10 vorgesehen, um das Kühlmittel aus dem Kühlmittelkanal 8 durch Querbohrungen in diese Kühlmittelkanäle 9 und 10 einzuleiten und rückzuführen. Die Einleitung des Kühlmittels erfolgt über eine nicht dargestellte Drehzuführung mit geeigneten Dichtungen. Gleiches gilt für die Abführung des Kühlmittels aus den Kühlmittelkanälen 9 und 10.

Der Innendurchmesser der Ausnehmung 22 ist geringfügig kleiner als der Außendurchmesser einer Hülse' 5, welche in das Ende 3 einsetzbar ist. Bei Betriebstemperatur ergibt sich somit ein Schrumpfsitz oder Passsitz, durch welchen die Hülse 5 reibschlüssig in dem Ende 3 der Spindelwelle 2 gehalten wird.

Weiterhin zeigt die Fig. 1 eine Induktionsheizung 4 mittels Induktionsspulen. Diese sind mit einer Ferritabschirmung 7 nach außen hin abgeschirmt, um eine möglichst effektive Erwärmung des rohrförmigen Endes 3 zu erzielen.

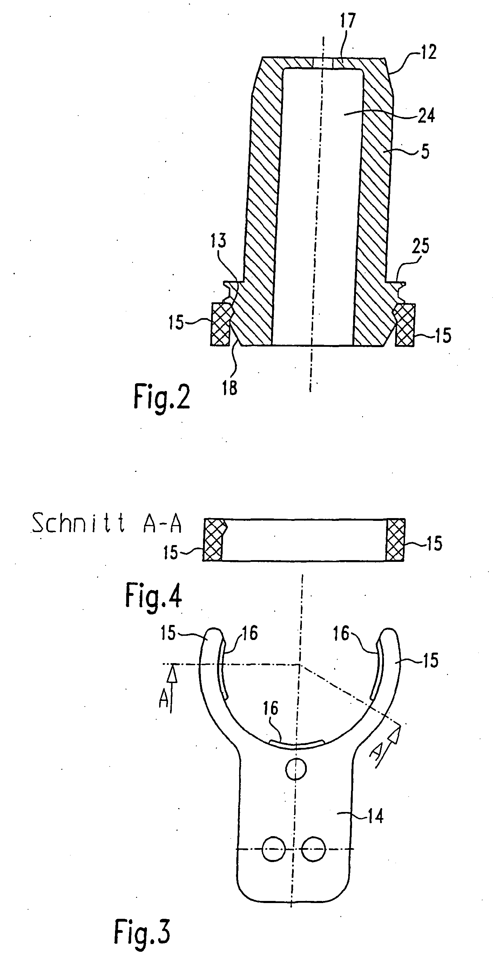

Die Kühlrippen 21 dienen bei schneller Drehung der Spindelwelle 2 zur Kühlung des Endes 3.
Die Hülse 5 ist vergrößert in Fig. 2 dargestellt. Diese umfasst eine stirnseitige Wand 17, welche vorderseitig eine Ausnehmung 24 begrenzt. Die Wand 17 ist mit einer Entlüftungsbohrung versehen. Außen weist das vordere Ende der Hülse 5 eine bevorzugt konische Einführschräge 12 auf. Diese dient, zusammen mit einer Einführschräge 11 des Endes 3 der Spindelwelle 2 zum leichteren Einschieben der Hülse 5.

An ihrem hinteren Endbereich ist die Hülse 5 mit einer Verdickung versehen, in welcher zumindest eine Ringnut 13 ausgebildet ist. Diese dient zum Einrasten von Greiferarmen 15 einer Greiferzange 14 (siehe Fig. 3 und 4).

Die Verdickung des Endes der Hülse 5 bildet eine Anschlagfläche 25 zur exakten Positionierung der Hülse 5 in dem Ende 3 der Spindelwelle 2. Der Durchmesser der Ausnehmung 24 ist geringfügig kleiner als der Außendurchmesser eines Schaftes 6 eines Werkzeugs 1, wodurch sich ein reibschlüssiger Schrumpfsitz oder Passsitz ergibt. Durch Erwärmung der Hülse 5 kann diese mit dem Schaft 6 des Werkzeugs 1 verbunden werden. Es versteht sich, dass auch andere Möglichkeiten der Verbindung zwischen dem Werkzeug 1 und der Hülse 5 möglich sind.

Die Fig. 3 und 4 zeigen eine Ausgestaltung der Greiferzange 14 mit seitlichen Greiferarmen 15, die elastisch verformbar sind. Sowohl die Greiferarme 15 als auch der mittlere Bereich der Greiferzange 14 ist jeweils mit einem Steg 16 versehen, der zum sicheren Einrasten in die Ringnut 13 dient. Der Steg 16 kann auch durchgehend ausgebildet sein.

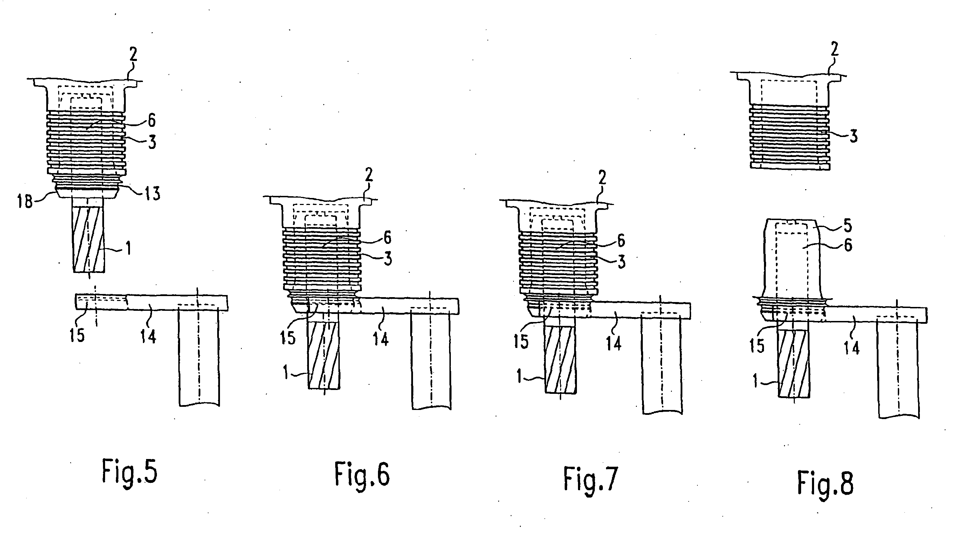

Die Fig. 5 bis 8 zeigen unterschiedliche Schritte zum Entnehmen der Hülse 5 zusammen mit dem Werkzeug 1 von der Spindelwelle 2. Das Einsetzen eines Werkzeugs folgt in analoger Weise. Die Fig. 5 zeigt die Anfahrposition der Greiferzange 14 an das untere Ende des Werkzeugs 1 bzw. der Spindelwelle 2. Dabei ist ein geringfügiger radialer Versatz der Mittelachse der Spindelwelle und des Werkzeugs relativ zu der Mittelachse der durch die Greiferarme 15 gebildeten Ausnehmung ersichtlich. Bei der in Fig. 6 gezeigten Eintauchposition wird die Greiferzange 14 geringfügig radial bewegt, nachdem diese an die Hülse 5 angenähert wurde. Dabei schnappen bei der Bewegung von Fig. 5 zu Fig. 6 die Stege 16, unterstützt durch die Einführschräge 18, am freien Ende der Hülse 5 in die Ringnut 13 ein. Durch die radiale Bewegung wird auch der mittlere Steg 16 mit der Ringnut 13 in Eingriff gebracht. Die Fig. 7 zeigt eine Ablageposition, bei welcher eine Erwärmung des Endes 3 der Spindelwelle 2 erfolgt, um die Hülse 5 frei zu geben. Die Fig. 8 zeigt den Zustand, in welchem durch axiale Bewegung der Greiferzange 14 das Werkzeug 1 zusammen mit der Hülse 5 von dem Ende 2 der Spindelwelle 1 entnommen wird. Die Montage eines Werkzeugs erfolgt in analog umgekehrter Weise. Alternativ kann an Stelle der Greiferzange 14 auch die Spindel 2 bewegt werden.

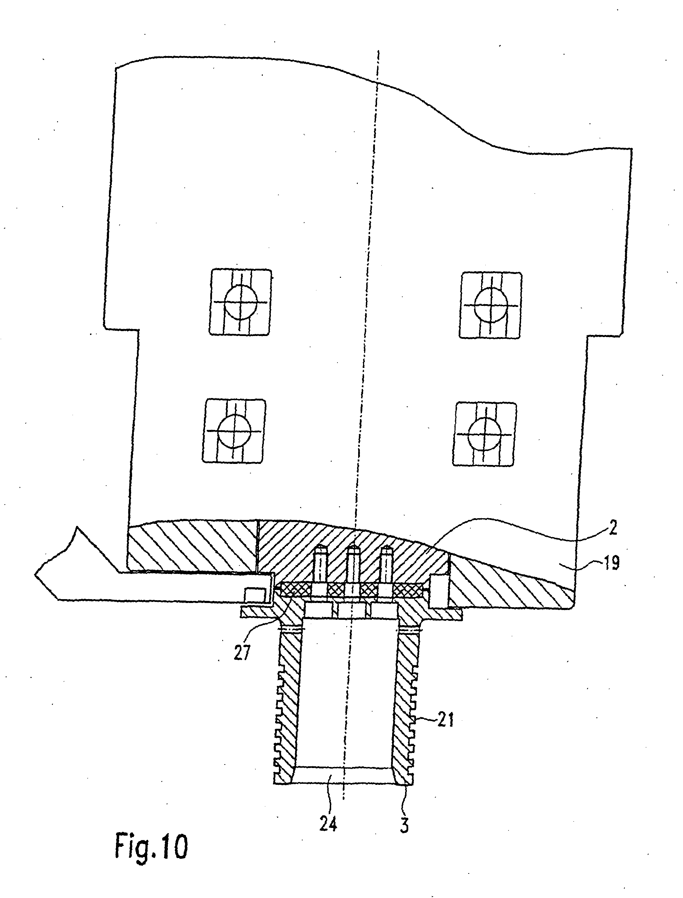

Die Fig. 9 und 10 zeigen weitere Ausführungsbeispiele. Um das Ausschrumpfen der Hülse 5 mit dem Werkzeug 1 aus dem rohrförmigen Ende 3 der Spindelwelle 2 zu vereinfachen, kann in einer Weiterentwicklung der Erfindung der Wärmeübergang zwischen rohrförmigem Ende 3 der Spindel welle 2 und der Hülse 5 verschlechtert werden. Dazu sind erfindungsgemäß im Bereich des Schrumpfsitzes zwischen Hülse 5 und rohrförmigem Ende 3 der Spindelwelle 2 außen auf der Hülse 5 und/oder innen in dem rohrförmigen Ende 3 der Spindelwelle 2 Ausnehmungen 26 eingebracht werden (Fig. 9). Diese Ausnehmungen 26 sind erfindungsgemäß als ringförmige Nuten am Umfang angeordnet. Die Tiefe kann relativ gering gehalten werden. Im Bereich der Ausnehmungen 26 ist der Passsitz zwischen Hülse 5 und rohrförmigem Ende 3 der Spindelwelle 2 unterbrochen, das heißt, die Hülse 5 ist durch ein kleines Luftpolster von dem rohrförmigen Ende 3 der Spindelwelle 2 getrennt, bzw. isoliert. Während des induktiven Aufwärmvorganges des rohrförmigen Endes 3 der Spindelwelle 2 führt dies dazu, dass die in das rohrförmige Ende 3 der Spindelwelle 2 eingebrachte Wärme nicht so schnell in die Hülse 5 eindringen kann. Die Ausnehmungen 26 mit der darin enthaltenen Luft wirken wie eine thermische Isolation. Dadurch wird die beim Ausschrumpfen durch die schnelle äußere Erwärmung des rohrförmigen Endes 3 der Spindelwelle 2 entstehende Temperaturdifferenz zwischen Hülse 5 und rohrförmigem Ende 3 der Spindelwelle 2 noch verstärkt und ein Ausschrumpfen der Hülse 5 aus dem rohrförmigen Ende 3 der Spindelwelle 2 leichter möglich.

Um während des Ein- oder Ausschrumpfens der Hülse 5 in das rohrförmige Ende 3 der Spindelwelle 2 ein Eindringen der eingebrachten Wärme in die Spindel über die Spindelwelle 2 zu verhindern, ist es vorteilhaft, diese geteilt auszuführen und zwischen der eigentlichen Spindelwelle 2 und dem rohrförmigen Ende 3 eine thermisch isolierende Platte 27, beispielsweise aus Keramik, anzubringen (Fig. 10). Diese Platte 27 verhindert während des Betriebes der Spindel auch, dass sich in der Spindel entstehende Wärme über die Spindelwelle 2 in das rohrförmige Ende 3 der Spindelwelle 2 und weiter in die Hülse 5 und das Bearbeitungswerkzeug 1 ausbreiten kann, was zu unerwünschten maßlichen Veränderungen führen würde.

In einer Weiterbildung, nicht zur Erfindung gehörend, ist vorgesehen, dass für die thermische Isolierung zwischen dem rohrförmigen Ende 3 der Spindelwelle 2 und der Hülse 5 eine Beschichtung vorgesehen ist, welche thermisch isoliert. Diese kann beispielsweise in Form einer keramischen Beschichtung ausgebildet sein, welche eine sehr geringe Wärmeleitung hat. Es ist möglich, diese Beschichtung entweder an der Hülse 5 oder an dem rohrförmigen Ende 3 der Spindelwelle 2 aufzubringen. Der Vorteil der thermischen Isolierung mittels einer Beschichtung liegt darin, dass der tragende Anteil der Flächenpressung beim Einschrumpfen der Hülse 5 in das rohrförmige Ende 3 der Spindelwelle 2 nicht verringert wird.

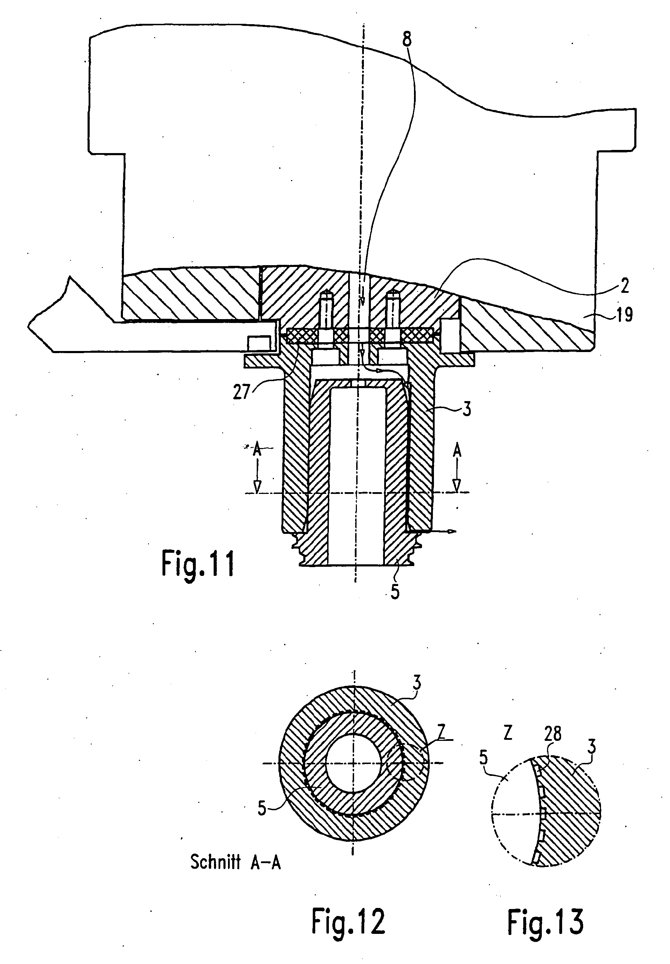

In einer weiterführenden Ausgestaltung (Fig. 11 bis 13) ist vorgesehen, Ausnehmungen 28 im Bereich der Kontaktfläche zwischen dem rohrförmigen Ende 3 der Spindelwelle 2 und der Hülse 5 vorzusehen, wobei zumindest eine derartige Ausnehmung 28 vorgesehen wird, welche sich über die Länge der Kontaktfläche erstreckt. Die Ausnehmung 28 kann gerade oder gewendelt ausgebildet sein, sie kann axial oder schräg angeordnet sein. Es ist auch möglich, mehrere derartige Ausnehmungen 28 vorzusehen. Bevorzugterweise ist die Ausnehmung 28 in Form einer Nut ausgebildet, welche entweder in der Hülse 5 oder in dem rohrförmigen Ende 3 der Spindelwelle 2 vorgesehen ist.

Bei dieser Ausgestaltung ist es möglich, durch die Ausnehmung ein Kühlmedium durchzuleiten. Dieses kann beispielsweise über eine Bohrung oder einen Kühlmittelkanal 8 in der Spindelwelle 2 zugeführt werden. So ist es beispielsweise möglich, Druckluft oder eine Kühlflüssigkeit durch die Ausnehmungen 28 zu leiten. Das kühlmedium strömt somit durch die Ausnehmungen 28. Im Falle von Druckluft kann diese direkt entweichen, bei Verwendung einer Flüssigkeit müsste eine Ableitung vorgesehen sein.

Durch die Ausnehmungen wird somit nicht nur eine Isolierung durch ein in den Ausnehmungen vorhandenes Luftpolster erreicht, vielmehr wird die Möglichkeit einer aktiven Kühlung der Trennfläche oder Kontaktfläche zwischen der Hülse 5 und dem rohrförmigen Ende 3 der Spindelwelle 2 bewirkt. Die Durchleitung des Kühlmediums kann dabei selektiv erfolgen, um beim Erwärmen des rohrförmigen Endes (3) eine Erwärmung der Hülse 5 zu verhindern oder zu verzögern und/oder um bei der nachfolgenden Abkühlung zusätzlich Wärme abzuführen.

Durch die beschriebene Ausgestaltung wird das Ausschrumpfen der Hülse 5 aus dem rohrförmigen Ende 3 der Spindelwelle wesentlich erleichtert, weil der durch die Induktionserwärmung des rohrförmigen Endes 3 entstehende Temperaturunterschied zwischen Hülse 5 und rohrförmigem Ende 3 noch größer wird. Entsprechend können die Haftmaße (das Übermaß) für den Schrumpfsitz zwischen Hülse 5 und rohrförmigem Ende 3 noch größer gewählt werden. Hierdurch ist eine größere Kraftübertragung möglich.

### Bezugszeichenliste

- 1: Werkzeug
- 2: Spindelwelle
- 3: rohrförmiges Ende
- 4: Induktionsheizung
- 5: Hülse
- 6: Schaft
- 7: Ferritabschirmung
- 8: Kühlmittelkanal
- 9: Kühlmittelkanal
- 10: Kühlmittelkanal
- 11: Einführschräge
- 12: Einführschräge
- 13: Ringnut
- 14: Greiferzange
- 15: Greiferarm
- 16: Steg
- 17: Wand
- 18: Einführschräge
- 19: Spindelgehäuse
- 20: Lager
- 21: Kühlrippe
- 22: Ausnehmung
- 23: Entlüftungsbohrung
- 24: Ausnehmung
- 25: Anschlagfläche
- 26: Ausnehmung/Ringnut
- 27: Platte/Isolierelement
- 28: Axiale Ausnehmung

## Patentansprüche

1. Vorrichtung mit einer drehbaren Spindelwelle (2) einer Werkzeugmaschine, einer Induktionsheizung (4), einer rohrförmigen Hülse (5) und einem Werkzeug, welches zum lösbaren Spannen an der drehbaren Spindelwelle einer Werkzeugmaschine aufnehmbar ist,
- wobei die Spindelwelle (2) an ihrem Ende (3) rohrförmig ausgebildet ist,
- wobei im Bereich des rotierenden Endes (3) der Spindelwelle die Induktionsheizung (4) angeordnet ist,
- wobei in dem rohrförmigen Ende (3) der Spindelwelle (2) lösbar die rohrförmige Hülse (5) mittels eines Passsitzes eingesetzt ist,
- wobei in der rohrförmigen Hülse (5) mittels eines weiteren Passsitzes lösbar ein Schaft (6) des Werkzeugs (1) angeordnet ist,
**dadurch gekennzeichnet, dass**
- im Bereich der Kontaktfläche zwischen dem rohrförmigen Ende (3) der Spindelwelle (2) und der Hülse (5) eine thermische Isolierung in Form zumindest einer als Ringnut (26) ausgebildeten Ausnehmung angeordnet ist.

2. Vorrichtung nach Anspruch 1, **dadurch gekennzeichnet, dass** die thermische Isolierung in Form zumindest einer Ausnehmung (26) des rohrförmigen Endes (3) der Spindelwelle (2) ausgebildet ist.

3. Vorrichtung nach Anspruch 1, **dadurch gekennzeichnet, dass** die thermische Isolierung in Form zumindest einer Ausnehmung (26) an der Außenfläche der Hülse (5) ausgebildet ist.

4. Vorrichtung nach Anspruch 1 bis 3, **dadurch gekennzeichnet, dass** mehrere Ausnehmungen (26) zur thermischen Isolierung vorgesehen sind.

5. Vorrichtung nach einem der Ansprüche 1 bis 4, **dadurch gekennzeichnet, dass** die zumindest eine sich über die Länge der Kontaktfläche erstreckende Ausnehmung (26) mit einem Kühlmedium durchströmbar ist.

6. Vorrichtung nach einem der Ansprüche 1 bis 5, **dadurch gekennzeichnet, dass** das rohrförmige Ende (3) und die Spindelwelle (2) mittels eines Isolierelements (27) thermisch gegeneinander isoliert sind.

7. Vorrichtung nach Anspruch 6, **dadurch gekennzeichnet, dass** das Isolierelement (27) in Form einer Platte aus einem Material mit niedriger Wärmeleitfähigkeit gefertigt ist.

8. Vorrichtung nach einem der Ansprüche 1 bis 7, **dadurch gekennzeichnet, dass** der Schaft (6) des Werkzeugs (1), die Hülse (5) und das rohrförmige Ende (3) der Spindelwelle (2) im Wesentlichen in gleicher axialer Position relativ zueinander angeordnet sind.

9. Vorrichtung nach einem der Ansprüche 1 bis 8, **dadurch gekennzeichnet, dass** das rohrförmige Ende (3) der Spindelwelle (2), die Hülse (5) und der Schaft (6) des Werkzeugs (1) jeweils unterschiedliche Wärmeausdehnungskoeffizienten aufweisen.

10. Vorrichtung nach einem der Ansprüche 1 bis 9, **dadurch gekennzeichnet, dass** das rohrförmige Ende (3) der Spindelwelle (2) mit einer Einführschräge (11) versehen ist.

11. Vorrichtung nach einem der Ansprüche 1 bis 10, **dadurch gekennzeichnet, dass** die Hülse (5) mit einer Einführschräge (12) versehen ist.

12. Vorrichtung nach einem der Ansprüche 1 bis 11, **dadurch gekennzeichnet, dass** die Hülse (5) mit zumindest einer Ringnut (13) für eine Greiferzange (14) versehen ist.

13. Werkzeugmaschine mit einer Vorrichtung nach einem der Ansprüche 1 bis 12

14. Werkzeugspannhülse zum lösbaren Spannen eines Werkzeugs (1) in einer Spindelwelle (2) einer Werkzeugmaschine, wobei die Hülse (5) im Wesentlichen in Form eines zylindrischen Rohres ausgebildet ist **dadurch gekennzeichnet, daß** die Hülse (5) an ihrer mit dem rohrförmigen Ende (3) der Spindelwelle (2) in Kontakt bringbaren Oberfläche mit einer thermischen Isolierung versehen ist, welche in Form zumindest einer Ausnehmung (26) in Form zumindest einer Ringnut (26) ausgebildet ist.

15. Hülse nach Anspruch 14, **dadurch gekennzeichnet, dass** die Hülse (5) mit einer vorderseitigen Wand (17) versehen ist.

16. Hülse nach einem der Ansprüche 14 oder 15, **dadurch gekennzeichnet, dass** die Hülse (5) im vorderen Bereich mit einer Einführschräge (12) versehen ist.

17. Hülse nach einem der Ansprüche 14 bis 16, **dadurch gekennzeichnet, dass** die Hülse (5) am hinteren Bereich mit einer Einführschräge (18) versehen ist.

## Claims

1. An apparatus comprising a rotatable spindle shaft (2) of a machine tool, an induction heating (4), a tubular sleeve (5) and a tool which can be received at the rotatable spindle shaft of a machine tool for detachable clamping,
- wherein the spindle shaft (2) is formed tubular at its end (3),
- wherein the induction heating (4) is arranged in the region of the rotating end (3) of the spindle shaft,
- wherein the tubular sleeve (5) is press-fitted detachably in the tubular end (3) of the spindle shaft,
- wherein a shaft (6) of the tool (1) is further press-fitted detachably in the tubular sleeve (5),
**characterized in that**
- a thermal insulation in the form of at least one recess formed as an annular groove (26) is arranged in the region of the contact surface between the tubular end (3) of the spindle shaft (2) and the sleeve (5).

2. The apparatus of claim 1, **characterized in that** the thermal insulation is formed as at least one recess (26) of the tubular end (3) of the spindle shaft (2).

3. The apparatus of claim 1, **characterized in that** the thermal insulation is formed as at least one recess (26) at the external surface of the sleeve (5).

4. The apparatus of claims 1 to 3, **characterized in that** a plurality of recesses (26) is provided for thermal insulation.

5. The apparatus of one of claims 1 to 4, **characterized in that** the at least one recess (26) extending along the length of the contact surface can be passed by a cooling medium.

6. The apparatus of one of claims 1 to 5, **characterized in that** the tubular end (3) and the spindle shaft (2) are thermally insulated against each other by means of an insulating member (27).

7. The apparatus of claim 6, **characterized in that** the insulating member (27) is made in the form of a plate from a material having a low heat conductivity.

8. The apparatus of one of claims 1 to 7, **characterized in that** the shaft (6) of the tool (1), the sleeve (5) and the tubular end (3) of the spindle shaft (2) are arranged substantially in an identical axial position relative to each other.

9. The apparatus of one of claims 1 to 8, **characterized in that** the tubular end (3) of the spindle shaft (2), the sleeve (5) and the shaft (6) of the tool (1) respectively have different heat expansion coefficients.

10. The apparatus of one of claims 1 to 9, **characterized in that** the tubular end (3) of the spindle shaft (2) is provided with an insertion bevel (11).

11. The apparatus of one of claims 1 to 10, **characterized in that** the sleeve (5) is provided with an insertion bevel (12).

12. The apparatus of one of claims 1 to 11, **characterized in that** the sleeve (5) is provided with at least one annular groove (13) for a gripper (14).

13. A machine tool including an apparatus of one of claims 1 to 12.

14. A tool clamping sleeve for detachably clamping a tool (1) into a spindle shaft (2) of a machine tool, the sleeve (5) substantially having the shape of a cylindrical tube, **characterized in that** the sleeve (5) is provided with a thermal insulation at its surface which can be brought into contact with the tubular end (3) of the spindle shaft (2), which is formed as at least one recess (26) in the form of at least one annular groove (26).

15. The sleeve of claim 14, **characterized in that** the sleeve (5) is provided with a front side wall (17).

16. The sleeve of one of claims 14 or 15, **characterized in that** the sleeve (5) is provided with an insertion bevel (12) at its front portion.

17. The sleeve of one of claims 14 to 16, **characterized in that** the sleeve (5) is provided with an insertion bevel (18) at its rear portion.

## Revendications

1. Dispositif comprenant un arbre de broche (2) rotatif d'une machine-outil, un chauffage par induction (4), une douille tubulaire (5) et un outil qui peut être reçu pour le serrage amovible au niveau de l'arbre de broche rotatif d'une machine-outil,
- dans lequel l'arbre de broche (2) est réalisé de manière tubulaire au niveau de son extrémité (3),
- dans lequel le chauffage par induction (4) est agencé dans la zone de l'extrémité rotative (3) de l'arbre de broche,
- dans lequel la douille tubulaire (5) est insérée de manière amovible dans l'extrémité tubulaire (3) de l'arbre de broche (2) au moyen d'un ajustement fin,
- dans lequel une queue (6) de l'outil (1) est agencée de manière amovible dans la douille tubulaire (5) au moyen d'un autre ajustement fin,
**caractérisé en ce que**
- une isolation thermique sous la forme d'au moins un évidement réalisé sous forme de rainure annulaire (26) est agencée dans la zone de la surface de contact entre l'extrémité tubulaire (3) de l'arbre de broche (2) et la douille (5).

2. Dispositif selon la revendication 1, **caractérisé en ce que** l'isolation thermique est réalisée sous la forme d'au moins un évidement (26) de l'extrémité tubulaire (3) de l'arbre de broche (2).

3. Dispositif selon la revendication 1, **caractérisé en ce que** l'isolation thermique est réalisée sous la forme d'au moins un évidement (26) au niveau de la surface extérieure de la douille (5).

4. Dispositif selon la revendication 1 à 3, **caractérisé en ce que** plusieurs évidements (26) sont prévus pour l'isolation thermique.

5. Dispositif selon l'une quelconque des revendications 1 à 4, **caractérisé en ce que** l'au moins un évidement (26) s'étendant sur la longueur de la surface de contact peut être traversé par un agent de refroidissement.

6. Dispositif selon l'une quelconque des revendications 1 à 5, **caractérisé en ce que** l'extrémité tubulaire (3) et l'arbre de broche (2) sont isolés thermiquement l'un de l'autre au moyen d'un élément isolant (27).

7. Dispositif selon la revendication 6, **caractérisé en ce que** l'élément isolant (27) est fabriqué sous forme de plaque en un matériau à faible conductibilité thermique.

8. Dispositif selon l'une quelconque des revendications 1 à 7, **caractérisé en ce que** la queue (6) de l'outil (1), la douille (5) et l'extrémité tubulaire (3) de l'arbre de broche (2) sont agencées essentiellement dans la même position axiale l'une par rapport à l'autre.

9. Dispositif selon l'une quelconque des revendications 1 à 8, **caractérisé en ce que** l'extrémité tubulaire (3) de l'arbre de broche (2), la douille (5) et la queue (6) de l'outil (1) présentent chacune différents coefficients de dilatation thermique.

10. Dispositif selon l'une quelconque des revendications 1 à 9, **caractérisé en ce que** l'extrémité tubulaire (3) de l'arbre de broche (2) est dotée d'un chanfrein d'introduction (11).

11. Dispositif selon l'une quelconque des revendications 1 à 10, **caractérisé en ce que** la douille (5) est dotée d'un chanfrein d'introduction (12).

12. Dispositif selon l'une quelconque des revendications 1 à 11, **caractérisé en ce que** la douille (5) est dotée d'au moins une rainure annulaire (13) pour une pince de préhension (14).

13. Machine-outil avec un dispositif selon l'une quelconque des revendications 1 à 12.

14. Douille de serrage d'outil destinée au serrage amovible d'un outil (1) dans un arbre de broche (2) d'une machine-outil, dans lequel la douille (5) est réalisée essentiellement sous forme de tube cylindrique, **caractérisée en ce que** la douille (5) est dotée au niveau de sa surface supérieure pouvant être mise en contact avec l'extrémité tubulaire (3) de l'arbre de broche (2), d'une isolation thermique qui est réalisée sous la forme d'au moins un évidement (26) sous la forme d'au moins une rainure annulaire (26).

15. Douille selon la revendication 14, **caractérisée en ce que** la douille (5) est dotée d'une paroi côté avant (17).

16. Douille selon l'une quelconque des revendications 14 ou 15, **caractérisée en ce que** la douille (5) est dotée d'un chanfrein d'introduction (12) dans la zone avant.

17. Douille selon l'une quelconque des revendications 14 à 16, **caractérisée en ce que** la douille (5) est dotée d'un chanfrein d'introduction (18) au niveau de la zone arrière.
